# EUROPEAN PATENT APPLICATION

(11) **EP 1 170 742 A2**
(43) Date of publication of application: **09.01.2002**
(21) Application number: 01114999.4
(22) Date of filing: 20.06.2001
(51) Int. Cl.: G11B 11/105

(54) **Magneto-optical recording medium and process for manufacturing a magneto-optical recording medium**

(30) Priority: 04.07.2000 JP 2000202682
(71) Applicant: SONY CORPORATION, Tokyo (JP)
(72) Inventor: Suwabe, Masatsugu, Shinagawa-ku, Tokyo (JP)
(74) Representative: Müller . Hoffmann & Partner Patentanwälte

(57) **Abstract**

In order to simplify the manufacturing process for a CAD magneto-optical recording medium and reduce the cost therefor, there is provided a magnetically induced super resolution-type magneto-optical recording medium which comprises, on a light-transmitting substrate (1), at least a recording layer (6) for recording and retaining information therein, and a read-out layer (3) for copying therein the information retained in the recording layer during reproduction of the information, wherein the magneto-optical recording medium has an exchange-coupling breaking layer (5) between the recording layer and the read-out layer, wherein the exchange-coupling breaking layer comprises a layer of a nitride of either one of GdFeCo or TbFeCo.

## Description

### BACKGROUND OF THE INVENTION

### Field of the Invention

The present invention relates to a magneto-optical recording medium and a process for manufacturing a magneto-optical recording medium.

### Description of the Related Art

As an information-rewritable recording medium, a magneto-optical recording medium which can record and read information by magneto-optical recording has been proposed and put into practical use.

In recent years, in the magneto-optical recording medium, by a technique called magnetically induced super resolution (hereinafter, frequently referred to simply as "MSR"), a mode in which information is read-out from a recording mark having a diameter smaller than the spot diameter of the laser beam used in the recording and reproduction of the information is proposed, and this is being attracting attention as a method for realizing a higher recording density of the recording medium.

The MSR is a technique such that a phenomenon in which a temperature distribution is caused in the spot of a laser beam emitted in the recording and reproduction of information is utilized, and the lower-temperature region or higher-temperature region in the spot of the laser beam is masked, making it possible to read-out the information from a recording mark having a diameter smaller than the spot diameter of the laser beam.

As an example of the MSR, Unexamined Japanese Patent Application Laid-Open Specification No. 5-81717 (which is a basic application of USP 5,707,727) discloses a center aperture detection (hereinafter, frequently referred to simply as "CAD") mode.

The CAD mode employs a magneto-optical recording medium having a construction such that the medium comprises a read-out layer having properties in which a magnetization state at room temperature is such that the in-plane magnetic anisotropy is predominant and the magnetization state changes in accordance with an increase in temperature so that the perpendicular magnetic anisotropy becomes predominant, and a recording layer for recording and retaining therein information, and a non-magnetic film is disposed between the read-out layer and the recording layer.

In the recording layer constituting the above magneto-optical recording medium, information is recorded by a recording mark having a diameter smaller than the spot diameter of a laser beam to be used in the recording or reproduction.

Then, in the reproduction of the information, when the read-out layer of the magneto-optical recording medium is irradiated with a laser beam, the read-out layer is heated by the laser beam and its temperature is elevated. In this instance, the laser beam is focused to the diffraction limited by an objective lens for collecting lights, and the light strength distribution is therefore Gaussian distribution, and thus it is known that the temperature distribution in the read-out layer is also Gaussian distribution.

Thus, the temperature of only the center portion of the read-out layer irradiated with the spot of the laser beam is elevated to about a magnetic compensation temperature, so that this portion becomes in a perpendicular magnetization state.

A leakage magnetic field from the recording layer is applied to the above-mentioned portion of the read-out layer in a perpendicular magnetization state, and the recording mark recorded in the recording layer is transferred thereto.

In this case, in the read-out layer, a portion to be in a perpendicular magnetization state is only the center portion irradiated with the spot of the laser beam, and other portions are still in an in-plane magnetization state. Therefore, these portions in an in-plane magnetization state serve as a mask against the leakage magnetic field from the recording layer, so that the information can be read-out from the recording mark having a diameter smaller than the spot diameter of the laser beam.

The magneto-optical recording medium applied to the above-mentioned CAD mode generally has a construction such that, on a light-transmitting substrate, for example, a first dielectric layer comprised of an SiN film, a read-out layer comprised of a rare earth-transition metals alloy, such as a GdFeCo film, a read-out auxiliary layer comprised of a rare earth-transition metals alloy, such as a GdFe film, a non-magnetic layer comprised of an Si film, a recording layer comprised of a rare earth-transition metals alloy, such as a TbFeCo film, a second dielectric layer comprised of an SiN film, and a heat diffusion layer comprised of an AlTi film are successively stacked on one another.

However, in the preparation of a magneto-optical recording medium having the above-mentioned multilayer structure, it is necessary that the layers be individually deposited by the respective sputtering processes therefor. Therefore, an apparatus having vacuum sputtering chambers in the number corresponding to the number of the layers to be deposited is needed, causing a problem that the cost for the manufacturing apparatus and further the manufacture cost for the magneto-optical recording medium increase.

In this situation, the present inventor has attempted to reduce the manufacture cost for the magneto-optical recording medium applied to the CAD mode.

### SUMMARY OF THE INVENTION

In the present invention, there is provided a magnetically induced super resolution-type magneto-optical recording medium comprising, on a light-transmitting substrate, at least a recording layer for recording and retaining information therein, and a read-out layer for copying therein the information retained in the recording layer during reproduction of the information, wherein the magneto-optical recording medium has an exchange-coupling breaking layer between the recording layer and the read-out layer, wherein the exchange-coupling breaking layer comprises a layer of a nitride of either one of GdFeCo or TbFeCo.

In addition, in the present invention, there is provided a magnetically induced super resolution-type magneto-optical recording medium comprising, on a light-transmitting substrate, at least a recording layer for recording and retaining information therein, a read-out layer for copying therein the information retained in the recording layer during reproduction of the information, and a read-out auxiliary layer, wherein the magneto-optical recording medium has an exchange-coupling breaking layer between the read-out auxiliary layer and the recording layer, wherein the exchange-coupling breaking layer comprises a layer of a nitride of either one of GdFe or TbFeCo.

The process for manufacturing a magneto-optical recording medium of the present invention is a process for manufacturing a magnetically induced super resolution-type magneto-optical recording medium which comprises, on a light-transmitting substrate, at least a recording layer for recording and retaining information therein, and a read-out layer for copying therein the information retained in the recording layer during reproduction of the information, wherein the process comprises the steps of: forming the read-out layer; forming, on the read-out layer, an exchange-coupling breaking layer comprising a layer of a nitride of GdFeCo by sputtering; and forming the recording layer on the exchange-coupling breaking layer, wherein the step of forming the exchange-coupling breaking layer is conducted by, immediately before completion of the step for forming the read-out layer, introducing N₂ into a chamber used for forming the read-out layer so that a layer of a nitride of GdFeCo having a thickness of a one-atom layer thickness or more is formed in the chamber.

The process for manufacturing a magneto-optical recording medium of the present invention is a process for manufacturing a magnetically induced super resolution-type magneto-optical recording medium which comprises, on a light-transmitting substrate, at least a recording layer for recording and retaining information therein, a read-out layer for copying therein the information retained in the recording layer during reproduction of the information, and a read-out auxiliary layer, wherein the process comprises the steps of: forming the read-out layer; forming the read-out auxiliary layer by sputtering; forming, on the read-out auxiliary layer, an exchange-coupling breaking layer comprising a layer of a nitride of GdFe by sputtering; and forming the recording layer on the exchange-coupling breaking layer, wherein the step of forming the exchange-coupling breaking layer is conducted by, immediately before completion of the step for forming the read-out auxiliary layer by sputtering, introducing N₂ into a chamber used for forming the read-out auxiliary layer so that a layer of a nitride of GdFe having a thickness of a one-atom layer thickness or more is formed in the chamber.

The process for manufacturing a magneto-optical recording medium of the present invention is a process for manufacturing a magnetically induced super resolution-type magneto-optical recording medium which comprises, on a light-transmitting substrate, at least a recording layer for recording and retaining therein at least information, a read-out layer for copying therein the information retained in the recording layer during reproduction of the information, and a read-out auxiliary layer, wherein the process comprises the steps of: forming the read-out layer; forming the read-out auxiliary layer by sputtering; forming, on the read-out auxiliary layer, an exchange-coupling breaking layer comprising a layer of a nitride of TbFeCo by sputtering; and forming the recording layer on the exchange-coupling breaking layer, wherein the step of forming the exchange-coupling breaking layer is conducted by, immediately after start of the step for forming the recording layer by sputtering, introducing N₂ into a chamber used for forming the recording layer so that a layer of a nitride of TbFeCo having a thickness of a one-atom layer thickness or more is formed in the chamber.

In the present invention, there is provided a magneto-optical recording medium which effectively achieves the reduction of the cost for film deposition while securing the performance of the magneto-optical recording medium at the same level as that of the conventional magneto-optical recording medium applied to the CAD mode.

The magneto-optical recording medium of the present invention has excellent signal characteristics, as compared to the magnetostatically coupled CAD magneto-optical disk having a conventional structure such that an SiN layer is formed as an exchange-coupling breaking layer, and the manufacturing process therefor is simplified, thus making it possible to reduce the manufacture cost.

Further, by the process for manufacturing a magneto-optical recording medium of the present invention, a magneto-optical disk having signal characteristics at the same level as that of the conventional magnetostatically coupled CAD magneto-optical disk can be produced at a low cost by the manufacturing apparatus and manufacturing process simpler than conventional ones, thus making it possible to reduce the manufacture cost.

### BRIEF DESCRIPTION OF THE DRAWINGS

The foregoing and other objects, features and advantages of the present invention will be apparent to those skilled in the art from the following description of the presently preferred exemplary embodiments of the invention taken in connection with the accompanying drawings, in which:
Fig. 1 is a diagrammatic cross-sectional view of one example of a magneto-optical recording medium of the present invention;
Fig. 2 is a diagrammatic cross-sectional view of another example of a magneto-optical recording medium of the present invention; and
Fig. 3 is a diagrammatic view illustrating a sputtering apparatus used in the process for manufacturing a magneto-optical recording medium of the present invention.

### DETAILED DESCRIPTION OF THE PREFERRED EMBODIMENTS

The magneto-optical recording medium of the present invention is a magnetically induced super resolution-type magneto-optical recording medium comprising, on a light-transmitting substrate, at least a recording layer for recording and retaining information therein, and a read-out layer for copying therein the information retained in the recording layer during reproduction of the information, wherein the magneto-optical recording medium has an exchange-coupling breaking layer between the recording layer and the read-out layer, wherein the exchange-coupling breaking layer comprises a layer of a nitride of either one of GdFeCo or TbFeCo.

Further, the magneto-optical recording medium of the present invention is a magnetically induced super resolution-type magneto-optical recording medium comprising, on a light-transmitting substrate, at least a recording layer for recording and retaining information therein, a read-out layer for copying therein the information retained in the recording layer during reproduction of the information, and a read-out auxiliary layer, wherein the magneto-optical recording medium has an exchange-coupling breaking layer between the read-out auxiliary layer and the recording layer, wherein the exchange-coupling breaking layer comprises a layer of a nitride of either one of GdFe or TbFeCo.

Hereinbelow, the magneto-optical recording medium of the present invention and the process for manufacturing a magneto-optical recording medium of the present invention will be described in detail with reference to the following examples and the accompanying drawings, but the magneto-optical recording medium of the present invention and the process for manufacturing a magneto-optical recording medium of the present invention are not limited to the following examples.

The magneto-optical recording medium applied to the present invention is one such that the MSR in the so-called center aperture detection (CAD) mode enables information to be read-out from a recording mark having a diameter smaller than a spot diameter of a laser beam emitted.

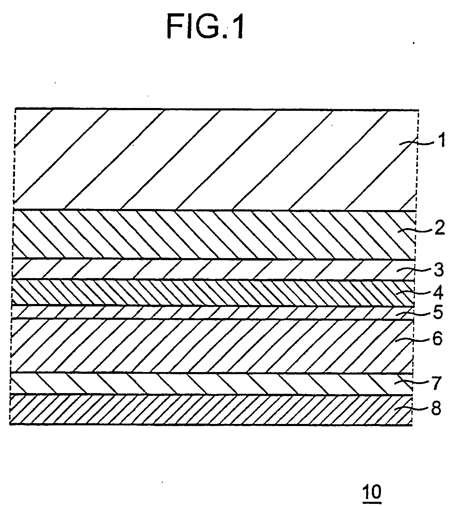

As shown in the diagrammatic view of the major portion of a magneto-optical recording medium in Fig. 1, a magneto-optical recording medium 10 of the present invention has a construction such that, on a light-transmitting substrate 1, a first dielectric layer 2, a read-out layer 3, a read-out auxiliary layer 4, an exchange-coupling breaking layer 5, a recording layer 6, a second dielectric layer 7, and a heat diffusion layer 8 are successively stacked on one another.

In the magneto-optical recording medium 10 of the present invention having the structure shown in Fig. 1, the exchange-coupling breaking layer 5 is formed between the read-out auxiliary layer 4 and the recording layer 6, and the exchange-coupling breaking layer 5 is formed particularly by nitriding part of the layer adjacent to the exchange-coupling breaking layer 5, i.e., part of the read-out auxiliary layer 4 or the recording layer 6.

That is, the exchange-coupling breaking layer 5 comprises a layer of a nitride of GdFe or TbFeCo.

The light-transmitting substrate 1 is formed from a material having transmitting properties to a laser beam emitted, and can be formed by injection molding using, for example, a polycarbonate resin, an acrylic resin, an amorphous polyolefin resin, or a styrene resin. In addition, in addition to resins, glass can also be used as a material for the light-transmitting substrate.

In the surface of the light-transmitting substrate, a predetermined fine concavo-convex constituting pits or grooves may be formed. When grooves are formed, a laser beam can be moved to an arbitrary position using the grooves as a pregroove, whereas, when pits are formed, they serve as an information signal to read-out the recorded information by irradiation with a laser beam.

The predetermined fine concavo-convex described above can be formed by injection molding or a photo polymerization molding method (2P molding method).

The first dielectric layer 2 and the second dielectric layer 7 improve the C/N (carrier to noise) characteristics and prevent intermediate layers, such as the read-out layer 3 and the recording layer 6 from suffering corrosion.

The light-transmitting substrate 1 often contains components which cause metals to suffer corrosion, such as chlorine ions. Therefore, by forming the first dielectric layer 2 and the second dielectric layer 7, the intermediate layers can be prevented from being directly affected by the metal-corrosive components.

It is necessary that each of the first dielectric layer 2 and the second dielectric layer 7 be formed from a material having a low absorptive power to the wavelength of the laser beam for recording and reproduction. For example, the layers 2, 7 can be formed by depositing an SiN film by a sputtering process.

The read-out layer 3 is formed on the first dielectric layer 2, and can be formed by depositing a rare earth-transition metals (RE-TM) alloy film, such as a GdFeCo alloy film, by, for example, a direct current sputtering process so that the thickness becomes, for example, about 300 ÅÅ.

The read-out layer 3 is an RE-rich rare earth-transition metals alloy film having a rare earth metal content larger than that of the compensation composition at room temperature, and is an in-plane magnetization film at room temperature in which the in-plane magnetic anisotropy is predominant, and the magnetization state changes in accordance with an increase in temperature so that the perpendicular magnetic anisotropy becomes predominant. In other words, in the read-out layer 3 at room temperature, the shape anisotropy is large due to high saturated magnetization and the magnetization state is an in-plane magnetization state such that the magnetization direction is in-plane, but, in accordance with an increase in temperature, the saturation magnetization becomes smaller, and the shape anisotropy is small at about the magnetic compensation temperature (T_{comp}) and the magnetization state is a perpendicular magnetization state such that the perpendicular magnetic anisotropy is predominant.

The read-out auxiliary layer 4 can be formed on the read-out layer 3 by, for example, a direct current sputtering process, and is comprised of, for example, a GdFe alloy film having a thickness of about 70 Å.

The read-out auxiliary layer 4 is provided for facilitating the change in state of the read-out layer 3 at a temperature (almost equal to the read-out temperature) at which the read-out layer 3 is changed from an in-plane magnetization state to a perpendicular magnetization state. In the magneto-optical recording medium, by providing the above read-out auxiliary layer 4 to facilitate the change in state of the read-out layer 3 at the read-out temperature, it is possible to realize the even higher recording density of the recording medium.

The exchange-coupling breaking layer 5 is provided so that the read-out layer 3 and the read-out auxiliary layer 4 are prevented from being exchange-coupled with the recording layer 6.

Conventionally, the exchange-coupling breaking layer 5 is generally formed by depositing, on the read-out auxiliary layer 4, for example, an Si film having a thickness of, for example, about 30 Å by a radio frequency sputtering process, for example, but, in the magneto-optical recording medium 10 of the present invention, the exchange-coupling breaking layer 5 is formed with the nitride material constituting the read-out auxiliary layer 4 or recording layer 6 which is the layer adjacent to the exchange-coupling breaking layer 5.

The exchange-coupling breaking layer 5 is formed so as to have a thickness sufficient to prevent the read-out layer 3 and the read-out auxiliary layer 4 from being exchange-coupled with the recording layer 6, namely, a thickness in the range of from a one-atom layer thickness to 100 Å. Even when the exchange-coupling breaking layer 5 is formed so as to have a thickness larger than 100 Å, the effect of the layer 5 as an exchange-coupling breaking layer is not improved and the productivity becomes poor, and thus the thickness of the layer 5 is 100 Å or less.

The recording layer 6 is a layer having a function of recording and retaining information, and is formed by depositing, for example, a TbFeCo layer on the exchange-coupling breaking layer 5 by a direct current sputtering process so that the thickness becomes, for example, about 500 Å.

The heat diffusion layer 8 is provided for making a large difference in temperature change between the read-out layer 3 and the recording layer 6 during cooling, and is formed by depositing an aluminum (Al) alloy film by, for example, a direct current sputtering process.

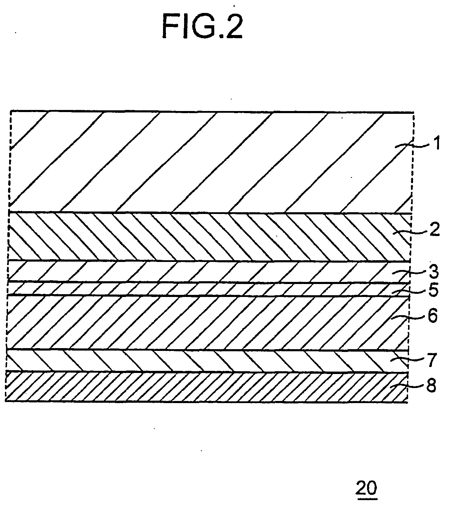

In the example of the magneto-optical recording medium 10 of the present invention shown in Fig. 1, explanation is made on the magneto-optical recording medium having a construction such that, on the light-transmitting substrate 1, the first dielectric layer 2, the read-out layer 3, the read-out auxiliary layer 4, the exchange-coupling breaking layer 5, the recording layer 6, the second dielectric layer 7, and the heat diffusion layer 8 are stacked on one another, but the magneto-optical recording medium of the present invention is not limited to the above example shown in Fig. 1, but can be applied to one having a construction such that the read-out auxiliary layer 4 is not formed as shown in Fig. 2.

Specifically, a magneto-optical recording medium 20 shown in Fig. 2 has a structure such that, on a light-transmitting substrate 1, a first dielectric layer 2, a read-out layer 3, an exchange-coupling breaking layer 5, a recording layer 6, a second dielectric layer 7, and a heat diffusion layer 8 are stacked on one another, and the exchange-coupling breaking layer 5 is formed between the read-out layer 3 and the recording layer 6, and the exchange-coupling breaking layer 5 comprises a layer of a nitride of GdFeCo or TbFeCo.

As an example of the method for forming the exchange-coupling breaking layer 5, there can be mentioned a method in which, immediately before completion of the step for forming the read-out layer 3 which is, for example, a GdFeCo layer, N₂ is introduced so that a GdFeCo nitride film having a thickness of a one-atom layer thickness or more is deposited.

In this case, the exchange-coupling breaking layer 5 can be formed in the chamber used for forming the read-out layer 3.

In addition, as another example of the method for forming the exchange-coupling breaking layer 5, there can be mentioned a method in which, immediately after start of the step for forming, for example, a TbFeCo layer as the recording layer 6 by sputtering, N₂ is introduced so that a TbFeCo nitride layer having a thickness of a one-atom layer thickness or more is deposited. In this case, the exchange-coupling breaking layer 5 can be formed in the chamber used for forming the recording layer.

Next, explanation is made on the process for manufacturing a magneto-optical recording medium 10 of the present invention and the sputtering apparatus used in the process of the present invention.

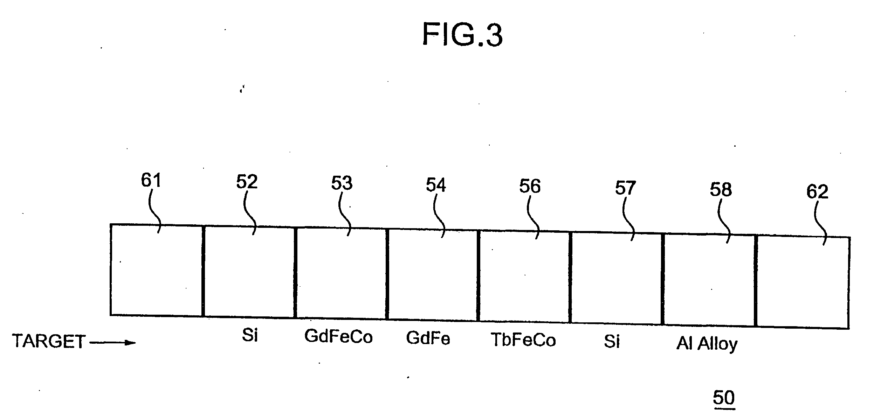

Fig. 3 is a diagrammatic view illustrating an in-line type sputtering apparatus 50.

The sputtering apparatus 50 has a construction such that independent vacuum chambers 52 to 58 for sputtering are connected to one another. In the figure, reference numeral 61 depicts a loading chamber and reference numeral 62 depicts an unloading chamber. Gate valves (not shown) for shielding the atmosphere in each chamber are provided between the respective chambers, so that the atmospheres in the chambers are completely independent of each other.

A pallet (not shown) on which at least one light-transmitting substrate 1 is placed moves only in a predetermined direction in these vacuum chambers, so that, on a light-transmitting substrate 1, a first dielectric layer 2, a read-out layer 3, a read-out auxiliary layer 4, an exchange-coupling breaking layer 5, a recording layer 6, a second dielectric layer 7, and a heat diffusion layer 8 are successively stacked on one another.

In the sputtering apparatus 50, the pallet on which the light-transmitting substrate 1 is placed can move so that it is not exposed to air at least when moving in the sputtering chamber.

The sputtering apparatus 50 shown in Fig. 3 has a high productivity, but, generally in the formation of a multilayer film by lamination, films are deposited using an independent vacuum chamber for sputtering per layer, and hence, the formation of the multilayer film basically requires vacuum chambers for sputtering in the number of the layers to be deposited.

Therefore, there is a need for providing and preparing manufacturing equipment according to the number of the layers to be deposited, and the manufacture cost is disadvantageously increased in accordance with an increase in number of the layers.

In view of this, in the process for manufacturing a magneto-optical recording medium of the present invention, the exchange-coupling breaking layer 5 is deposited in any one of a chamber 53 for a read-out layer, a chamber 54 for a read-out auxiliary layer, and a chamber 56 for a recording layer without providing a vacuum sputtering chamber for depositing the exchange-coupling breaking layer 5, thus simplifying the manufacturing equipment and reducing the manufacture cost.

A first exemplified manufacturing process is, as shown in Fig. 1, a process for preparation of a magneto-optical recording medium 10 having a read-out auxiliary layer 4, in which, on a light-transmitting substrate 1, a first dielectric layer 2, a read-out layer 3, and a read-out auxiliary layer 4 are individually deposited in the respective chambers therefor, and then, an exchange-coupling breaking layer 5 comprising a GdFe nitride layer is deposited on the read-out auxiliary layer 4.

The deposition of the exchange-coupling breaking layer 5 is conducted by, immediately before completion of the step for forming the read-out auxiliary layer 4 by sputtering, introducing N₂ into a chamber 54 for a readout auxiliary layer so that a GdFe nitride layer having a thickness of a one-atom layer thickness or more is deposited.

Then, a recording layer 6, a second dielectric layer 7, and a heat diffusion layer 8 are successively deposited in the respective chambers therefor.

A second exemplified manufacturing process is, as shown in Fig. 1, a process for preparation of a magneto-optical recording medium 10 having a read-out auxiliary layer 4, in which, on a light-transmitting substrate 1, a first dielectric layer 2, a read-out layer 3, and a read-out auxiliary layer 4 are individually deposited in the respective chambers therefor, and then, an exchange-coupling breaking layer 5 comprising a TbFeCo nitride layer is deposited on the read-out auxiliary layer 4.

The deposition of the exchange-coupling breaking layer 5 is conducted by, immediately after start of the step for forming a recording layer 6 by sputtering, introducing N₂ into a chamber 56 for a recording layer so that a TbFeCo nitride layer having a thickness of a one-atom layer thickness or more is deposited.

Then, the introduction of nitrogen gas is stopped to create an atmosphere of argon gas, and then, a recording layer 6, a second dielectric layer 7, and a heat diffusion layer 8 are successively deposited in the respective chambers therefor.

A third exemplified manufacturing process is, as shown in Fig. 2, a process for preparation of a magneto-optical recording medium 20 having a construction such that it has no read-out auxiliary layer 4, in which, on a light-transmitting substrate 1, a first dielectric layer 2 and a read-out layer 3 are individually deposited in the respective chambers therefor, and then, an exchange-coupling breaking layer 5 comprising a layer of a nitride of GdFeCo is deposited on the read-out layer 3.

The deposition of the exchange-coupling breaking layer 5 is conducted by, immediately before completion of the step for forming the read-out layer 3 by sputtering, introducing N₂ into a chamber 53 for a read-out layer so that a GdFeCo nitride layer having a thickness of a one-atom layer thickness or more is deposited.

Then, a recording layer 6, a second dielectric layer 7, and a heat diffusion layer 8 are successively deposited in the respective chambers therefor.

In each of the magneto-optical recording media 10, 20 shown in Figs. 1 and 2, a topcoat layer may be formed on the substrate 1 using a conventionally known material, and a protecting layer may be formed on the heat diffusion layer 8 using, for example, an ultraviolet curing resin.

Next, the magneto-optical recording medium of the present invention will be described in more detail with reference to the following Examples and Comparative Examples, which should not be construed as limiting the scope of the present invention.

### Example 1

A magneto-optical recording medium is prepared as follows.

As a light-transmitting substrate 1, a disk-form substrate having a thickness of 1.2 mm is produced from a polycarbonate resin.

The injection molding of the light-transmitting substrate 1 is performed using a stamper having a concavo-convex pattern corresponding to the grooves so that the grooves are formed in a spiral form in the light-transmitting substrate 1.

Then, an SiN film having a thickness of 90 nm is deposited by a radio frequency sputtering process to form a first dielectric layer 2.

Next, an amorphous Gd₃₁Fe₅₄Co₁₅ thin film having a thickness of 20 nm is deposited on the first dielectric layer 2 by a direct current sputtering process to form a read-out layer 3. Further, an amorphous Gd₁₁Fe₈₉ thin film having a thickness of 10 nm is deposited on the read-out layer 3 by a direct current sputtering process to form a read-out auxiliary layer 4.

Subsequently, an exchange-coupling breaking layer 5 comprising a layer of a nitride of GdFe is formed on the read-out auxiliary layer 4.

In the formation of the exchange-coupling breaking layer 5, immediately before completion of the step for forming the read-out auxiliary layer, argon gas and nitrogen gas are introduced at 200 SCCM and 50 SCCM, respectively, into the chamber used in the step for forming the read-out auxiliary layer 4 by sputtering to create an argon-nitrogen mixed gas atmosphere under 10 mTorr. Under the above conditions, an electric power of 1 kW is applied to a Gd₁₁Fe₈₉ alloy target to deposit a GdFe nitride film so that the thickness becomes about 2.5 nm, thus forming the exchange-coupling breaking layer 5.

An amorphous Tb₁₉Fe₆₆Co₁₅ thin film is deposited on the exchange-coupling breaking layer 5 by a direct current sputtering process so as to have a thickness of about 40 nm to form a recording layer 6.

Next, an SiN film having a thickness of 25 nm is deposited on the recording layer 6 by a radio frequency sputtering process to form a second dielectric layer 7. Then, an Al alloy film having a thickness of 40 nm is deposited on the second dielectric layer 7 by a direct current sputtering process to form a heat diffusion layer 8.

The thus prepared magneto-optical recording medium has a track pitch of 0.65 µm, and is an optical recording medium applied to the so-called land groove substrate in which information is written in both the area having grooves formed and the land area formed between the adjacent grooves.

### Example 2

A first dielectric layer 2, a read-out layer 3, and a read-out auxiliary layer 4 are formed on a light-transmitting substrate 1 in the same manner as in Example 1.

Then, the resultant laminate substrate is transferred to a chamber for forming a recording layer 6, and an exchange-coupling breaking layer 5 is formed in this chamber.

Specifically, first, argon gas and nitrogen gas are introduced at 200 SCCM and 50 SCCM, respectively, into the chamber for forming a recording layer 6 to create an argon-nitrogen mixed gas atmosphere under 10 mTorr. Under the above conditions, an electric power of 1 kW is applied to a Tb₁₉Fe₆₆Co₁₅ alloy target to deposit a TbFeCo nitride film so that the thickness becomes about 2.5 nm, thus forming the exchange-coupling breaking layer 5.

Then, an amorphous Tb₁₉Fe₆₆Co₁₅ thin film is deposited in the same chamber by a direct current sputtering process so as to have a thickness of about 40 nm to form a recording layer 6, and a second dielectric layer 7 and a heat diffusion layer 8 are deposited on the recording layer 6 in the same manner as in Example 1, thus preparing a magneto-optical recording medium.

### Example 3

A first dielectric layer 2 and a read-out layer 3 are formed on a light-transmitting substrate 1 in the same manner as in Example 1.

Then, an exchange-coupling breaking layer 5 is subsequently formed on the read-out layer 3.

In the formation of the exchange-coupling breaking layer 5, immediately before completion of the step for forming the read-out layer, argon gas and nitrogen gas are introduced at 200 SCCM and 50 SCCM, respectively, into the chamber used in the step for forming the readout layer 3 by sputtering to create an argon-nitrogen mixed gas atmosphere under 10 mTorr. Under the above conditions, an electric power of 1 kW is applied to a Gd₃₀Fe₅₅Co₁₅ alloy target to deposit a GdFeCo nitride film so that the thickness becomes about 2.5 nm, thus forming the exchange-coupling breaking layer 5.

Then, an amorphous Tb₁₉Fe₆₆Co₁₅ thin film is deposited in the same chamber by a direct current sputtering process so as to have a thickness of about 40 nm to form a recording layer 6, and a second dielectric layer 7 and a heat diffusion layer 8 are deposited on the recording layer 6 in the same manner as in Example 1, thus preparing a magneto-optical recording medium.

### Example 4

A first dielectric layer 2 and a read-out layer 3 are formed on a light-transmitting substrate 1 in the same manner as in Example 3.

Then, the resultant laminate substrate is transferred to a chamber for forming a recording layer 6, and an exchange-coupling breaking layer 5 is formed in this chamber.

Specifically, first, argon gas and nitrogen gas are introduced at 200 SCCM and 50 SCCM, respectively, into the chamber for forming a recording layer 6 to create an argon-nitrogen mixed gas atmosphere under 10 mTorr. Under the above conditions, an electric power of 1 kW is applied to a Tb₁₉Fe₆₆Co₁₅ alloy target to deposit a TbFeCo nitride film so that the thickness becomes about 2.5 nm, thus forming the exchange-coupling breaking layer 5.

Then, an amorphous Tb₁₉Fe₆₆Co₁₅ thin film is deposited in the same chamber by a direct current sputtering process so as to have a thickness of about 40 nm to form a recording layer 6, and a second dielectric layer 7 and a heat diffusion layer 8 are deposited on the recording layer 6 in the same manner as in Example 1, thus preparing a magneto-optical recording medium.

### Comparative Example 1

A first dielectric layer 2, a read-out layer 3, and a read-out auxiliary layer 4 are formed on a light-transmitting substrate 1 in the same manner as in Example 1.

Then, the resultant substrate is transferred to a chamber for forming a recording layer without forming an exchange-coupling breaking layer 5 and a recording layer is formed.

Specifically, an amorphous Tb₁₉Fe₆₆Co₁₅ thin film is deposited in a chamber for forming a recording layer 6 by a direct current sputtering process so as to have a thickness of about 40 nm to form a recording layer 6, and a second dielectric layer 7 and a heat diffusion layer 8 are deposited on the recording layer 6 in the same manner as in Example 1, thus preparing a magneto-optical recording medium.

### Comparative Example 2

A first dielectric layer 2, a read-out layer 3, and a read-out auxiliary layer 4 are formed on a light-transmitting substrate 1 in the same manner as in Example 1.

Then, the resultant laminate substrate is transferred to a chamber for forming an exchange-coupling breaking layer 5, and an SiN layer having a thickness of 2.5 nm is deposited on the read-out auxiliary layer 4 by a radio frequency sputtering process to form an exchange-coupling breaking layer 5.

Subsequently, the resultant substrate is transferred to a chamber for forming a recording layer 6, and an amorphous Tb₁₉Fe₆₆Co₁₅ thin film is deposited by a direct current sputtering process so as to have a thickness of about 40 nm to form a recording layer 6, and a second dielectric layer 7 and a heat diffusion layer 8 are deposited on the recording layer 6 in the same manner as in Example 1, thus preparing a magneto-optical recording medium.

### Comparative Example 3

A first dielectric layer 2 and a read-out layer 3 are formed on a light-transmitting substrate 1 in the same manner as in Example 3.

Then, the resultant laminate substrate is transferred to a chamber for forming an exchange-coupling breaking layer 5, and an SiN layer having a thickness of 2.5 nm is deposited on the read-out layer 3 by a radio frequency sputtering process to form an exchange-coupling breaking layer 5.

Subsequently, the resultant substrate is transferred to a chamber for forming a recording layer 6, and an amorphous Tb₁₉Fe₆₆Co₁₅ thin film is deposited by a direct current sputtering process so as to have a thickness of about 40 nm to form a recording layer 6, and a second dielectric layer 7 and a heat diffusion layer 8 are deposited on the recording layer 6 in the same manner as in Example 1, thus preparing a magneto-optical recording medium.

### Comparative Example 4

A first dielectric layer 2 and a read-out layer 3 are formed on a light-transmitting substrate 1 in the same manner as in Example 3.

Then, the resultant substrate is transferred to a chamber for forming a recording layer without forming an exchange-coupling breaking layer 5, and a recording layer is formed.

Specifically, an amorphous Tb₁₉Fe₆₆Co₁₅ thin film is deposited in a chamber for forming a recording layer 6 by a direct current sputtering process so as to have a thickness of about 40 nm to form a recording layer 6, and a second dielectric layer 7 and a heat diffusion layer 8 are deposited on the recording layer 6 in the same manner as in Example 1, thus preparing a magneto-optical recording medium.

With respect to each of the thus prepared magneto-optical recording media in Examples 1 to 4 and Comparative Examples 1 to 4, evaluation for recording and reproduction characteristics is made as follows.

The magneto-optical recording medium is rotated at a linear velocity of 9.5 m/s, and, while applying a recording magnetic field of -24 kA/m, a single repeated pattern is recorded in the land area at a pit length of 0.4 µm at a pit pitch of 0.8 µm.

In addition, each of the magneto-optical recording media in Examples 1 to 4 and Comparative Examples 1 to 4 is rotated at the same linear velocity, and the recorded signal is read while applying a reproducing magnetic field of +8 kA/m to measure a CNR (carrier-to-noise ratio)(dB).

The reproducing and recording LD power is adjusted so that the CNR becomes maximal.

The results of evaluation for the magneto-optical recording media in Examples 1 to 4 and Comparative Examples 1 to 4 are shown in Table 1.

In Table 1, the noise values (dBm) measured with respect to the magneto-optical recording media are also shown.

**Table 1**

| | example | | | | comparative example | | | |
|---|---|---|---|---|---|---|---|---|
| | 1 | 2 | 3 | 4 | 1 | 2 | 3 | 4 |
| CNR (dB) | 45.2 | 45.1 | 42.0 | 41.9 | 42.4 | 45.3 | 41.7 | 38.2 |
| Noise (dBm) | -59.9 | -60.1 | -61.9 | 62.2 | -55.8 | -60.3 | -62.1 | -58.5 |
| RBW 30 (kHz) SPAN 2 (MHz) | | | | | | | | |

As shown in Table 1, each of the magneto-optical recording medium in Example 1 having a construction such that it has the read-out auxiliary layer 4 and a GdFe nitride film as the exchange-coupling breaking layer 5 and the magneto-optical recording medium in Example 2 having a construction such that it has the read-out auxiliary layer 4 and a TbFeCo nitride film as the exchange-coupling breaking layer 5 exhibited excellent characteristics, i.e., excellent uniformity in the recording and reproducing signal amplitude in the disk circle and a practically satisfactory CNR value, as compared to the magneto-optical recording medium in Comparative Example 2 having a conventional structure such that it has an SiN layer as the exchange-coupling breaking layer 5.

From the above, it is apparent that, in Examples 1 and 2 of the present invention, the step for forming the exchange-coupling breaking layer 5 need not be conducted in an independent chamber therefor, and the manufacturing process for the magneto-optical recording medium can be simplified and the resultant medium has a practically satisfactory CNR value.

Also as shown in Table 1, each of the magneto-optical recording medium in Example 3 having a construction such that it has no read-out auxiliary layer 4 and has a GdFeCo nitride film as the exchange-coupling breaking layer 5 and the magneto-optical recording medium in Example 4 having a construction such that it has no read-out auxiliary layer 4 and has a TbFeCo nitride film as the exchange-coupling breaking layer 5 exhibited excellent characteristics, as compared to the magneto-optical recording medium in Comparative Example 3 having a conventional structure such that it has no read-out auxiliary layer 4 and has an SiN layer as the exchange-coupling breaking layer 5. From the above, it is apparent that, in the magneto-optical recording media in Examples 3 and 4, the step for forming the exchange-coupling breaking layer 5 need not be conducted in an independent chamber therefor, and the manufacturing process for the magneto-optical recording medium can be simplified.

Further, in the magneto-optical recording medium in Comparative Example 1 in which the read-out auxiliary layer 4 is formed but the exchange-coupling breaking layer 5 is not formed, part of the read-out auxiliary layer 4 served as an exchange-coupling breaking layer and therefore excellent signal characteristics can be obtained partially, but almost all the state of transfer of the signal is poor and the noise is increased, causing the CNR value to be lowered.

In the magneto-optical recording medium in Comparative Example 4 in which the read-out auxiliary layer 4 and the exchange-coupling breaking layer 5 are not formed, satisfactory signal characteristics can not be obtained and the noise is increased, causing the CNR value to be considerably lowered.

As mentioned above, in the present invention, there can be provided a magneto-optical recording medium which has excellent signal characteristics and can simplify the manufacturing process therefor, as compared to the magnetostatically-coupled CAD magneto-optical disk having a conventional structure such that an SiN layer is formed as an exchange-coupling breaking layer.

Thus, a magneto-optical disk having signal characteristics at the same level as that of the conventional magnetostatically-coupled CAD magneto-optical disk can be produced at a low cost, thus making it possible to reduce the manufacture cost.

Although the invention has been described in its preferred form with a certain degree of particularity, obviously many changes and variations are possible therein. It is therefore to be understood that the present invention may be practiced otherwise than as specifically described herein without departing from the scope and the sprit thereof.

## Claims

1. A magnetically induced super resolution-type magneto-optical recording medium comprising, on a light-transmitting substrate, at least a recording layer for recording and retaining information therein, and a read-out layer for copying therein the information retained in said recording layer during reproduction of the information, wherein:
an exchange-coupling breaking layer is disposed between said recording layer and said read-out layer, and
said exchange-coupling breaking layer comprises a layer of a nitride of either one of GdFeCo or TbFeCo.

2. A magnetically induced super resolution-type magneto-optical recording medium comprising, on a light-transmitting substrate, at least a recording layer for recording and retaining information therein, a read-out layer for copying therein the information retained in said recording layer during reproduction of the information, and a read-out auxiliary layer, wherein:
an exchange-coupling breaking layer is disposed between said read-out auxiliary layer and said recording layer, and
said exchange-coupling breaking layer comprises a layer of a nitride of either one of GdFe or TbFeCo.

3. The magneto-optical recording medium according to claim 1, wherein said exchange-coupling breaking layer has a thickness in a range of from a one-atom layer thickness to 100 Å.

4. The magneto-optical recording medium according to claim 2, wherein said exchange-coupling breaking layer has a thickness in a range of from a one-atom layer thickness to 100 Å.

5. A process for manufacturing a magnetically induced super resolution-type magneto-optical recording medium which comprises, on a light-transmitting substrate, at least a recording layer for recording and retaining information therein, and a read-out layer for copying therein the information retained in said recording layer during reproduction of the information, said process comprising the steps of:
forming said read-out layer;
forming, on said read-out layer, an exchange-coupling breaking layer comprising a layer of a nitride of GdFeCo by sputtering; and
forming said recording layer on said exchange-coupling breaking layer, wherein the step of forming said exchange-coupling breaking layer is conducted by, immediately before completion of said step for forming the read-out layer, introducing N₂ into a chamber used for forming said read-out layer so that a layer of a nitride of GdFeCo having a thickness of a one-atom layer thickness or more is formed in the chamber.

6. A process for manufacturing a magnetically induced super resolution-type magneto-optical recording medium which comprises, on a light-transmitting substrate, at least a recording layer for recording and retaining information therein, and a read-out layer for copying therein the information retained in said recording layer during reproduction of the information, said process comprising the steps of:
forming said read-out layer;
forming, on said read-out layer, an exchange-coupling breaking layer comprising a layer of a nitride of TbFeCo by sputtering; and
forming said recording layer on said exchange-coupling breaking layer, wherein the step of forming said exchange-coupling breaking layer is conducted by, immediately before completion of said step for forming the read-out layer, introducing N₂ into a chamber used for forming said read-out layer so that a layer of a nitride of TbFeCo having a thickness of a one-atom layer thickness or more is formed in the chamber.

7. A process for manufacturing a magnetically induced super resolution-type magneto-optical recording medium which comprises, on a light-transmitting substrate, at least a recording layer for recording and retaining information therein, a read-out layer for copying therein the information retained in said recording layer during reproduction of the information, and a read-out auxiliary layer, said process comprising the steps of:
forming said read-out layer;
forming said read-out auxiliary layer by sputtering;
forming, on said read-out auxiliary layer, an exchange-coupling breaking layer comprising a layer of a nitride of GdFe by sputtering; and
forming said recording layer on said exchange-coupling breaking layer, wherein the step of forming said exchange-coupling breaking layer is conducted by, immediately before completion of said step for forming the read-out auxiliary layer by sputtering, introducing N₂ into a chamber used for forming said read-out auxiliary layer so that a layer of a nitride of GdFe having a thickness of a one-atom layer thickness or more is formed in the chamber.

8. A process for manufacturing a magnetically induced super resolution-type magneto-optical recording medium which comprises, on a light-transmitting substrate, at least a recording layer for recording and retaining information therein, a read-out layer for copying therein the information retained in said recording layer during reproduction of the information, and a read-out auxiliary layer, said process comprising the steps of:
forming said read-out layer;
forming said read-out auxiliary layer by sputtering;
forming, on said read-out auxiliary layer, an exchange-coupling breaking layer comprising a layer of a nitride of TbFeCo by sputtering; and
forming said recording layer on said exchange-coupling breaking layer, wherein the step of forming said exchange-coupling breaking layer is conducted by, immediately after start of said step for forming the recording layer by sputtering, introducing N₂ into a chamber used for forming said recording layer so that a layer of a nitride of TbFeCo having a thickness of a one-atom layer thickness or more is formed in the chamber.
